# EUROPEAN PATENT APPLICATION

(11) **EP 1 690 926 A1**
(43) Date of publication of application: **16.08.2006**
(21) Application number: 04800155.6
(22) Date of filing: 26.11.2004
(51) Int. Cl.: C12F 3/10, B01D 5/00

(54) **PROCESS FOR THE TREATMENT OF STILLAGE GENERATED BY DISTILLATION IN THE TEQUILA INDUSTRY**

(30) Priority: 28.11.2003 MX JL03000040
(71) Applicant: Herrera Orendain, Elena, C:P: 45150 Zapopan, Jalisco (MX)
(72) Inventor: HERRERA ORENDAIN, Elena, Periférico Norte Lateral, C.P. 45150 Zapopan, Jalisco (MX); RODRIGUEZ FLORES, Victor Manuel, C.P. 44380 Guadalajara, Jalisco (MX)
(74) Representative: Alvarez Lopez, Laura Gema
(86) International application number: PCT/MX2004/000086
(87) International publication number: WO 2005/052113

(57) **Abstract**

The invention relates to a process and equipment for the treatment of stillage generated by the tequila industry during distillation and mashing, which are intended to eliminate any contaminants contained in the stillage for the purpose of water recovery by means of water vapour. The invention also relates to a novel heat exchanger and stillage evaporator which are used during the process in order to ensure that the vapour generated thereby comprises 100% water vapour. In this way, the vapour can be re-used in the process line, thereby saving water and eliminating residual discharges to canals or rivers. The solids recovered from the process can be used to produce sub-products having a high concentration of fibre, sugar, protein, as a mixture for livestock feed or biofertilizers, or to produce ethyl alcohol. The inventive process does not require skilled labour and can be performed by general production personnel. In addition, the process requires a surface area of no more than 180 m² and, as such, complies with most Official Standards worldwide.

## Description

### TECHNICAL FIELD

This invention relates to a process for generating steam from residual stillage that is formed in the process of distilling tequila, and to a method for reusing the steam obtained in this process in the tequila industry.

### BACKGROUND OF THE INVENTION

Currently, the tequila industry generates liquid and residual waste called "stillage", which comes from the tequila distilling stage, mainly from the mashers and rectifying stills, as they discharge contaminants which will affect the stillage, such as sugars, aldehydes, traces of alcohol, and a high content of other solids in all forms, naturally coffee-colored and occurring in high concentrations per the parameters established by most of Official Standards worldwide, in which are usually stipulated the parameters to be complied, namely: temperature N.A., fats and oils 15, sedimentable solids 1 ml/L, floating material absent, total suspended solids 150 mg/L, biochemical oxygen demand 150 mg/L, total nitrogen 40 mg/L, total phosphorus 20 mg/L, and content of heavy metals such as arsenic 0.2 mg/L, cadmium 0.2 mg/L, cyanide 2.0 mg/L, copper 4.0 mg/L, chromium 1 mg/L, mercury 0.01 mg/L, nickel 2 mg/L, lead 0.5 mg/L, zinc 10 mg/L.

At this time, conventional methods for treating the stillage are neither convenient nor efficient, nor are the processes, which are: biological, physical/chemical, agricultural irrigation of agave and single or double effect evaporation; in fact, no positive results have been obtained to date.

The biological treatment process consists in reducing the temperature of the stillage from 85° to 23°C using a system of coils with cold water or using a system of cooling towers, after which time its pH is neutralized in a balance tank using sodium hydroxide, calcium carbonate or even using an organic base. When the stillage turns black and flocs [particles of aggregated solid matter] form, it is passed through an anaerobic reactor. Here, at speeds below 0.6 m/sec, and with introduction of air and bacteria into the reactor, a biomass takes shape in which reduced levels of sugars form, and with flocs and molecular-weight chains left floating. Thereby the stillage is reduced from an initial concentration of 36,000 mg/L to 12,000 mg/L. This concentration, however, is outside the parameters indicated by the legal standards in force (already mentioned above). This is because the biomass is formed by passing it through a filter, press or rotary unit to get rid of any solids present, and then pumping the liquid through an aeration system which operates by atomizing the liquid while remaining in contact with the ambient environment (atmosphere). Thus, the biochemical oxygen demand is reduced to levels having a concentration of 8000 to 6000 mg/L.

The disadvantages of this system are as follows. In order for the biomass to form, there needs to be a continuous supply of bacteria, but there is nowhere to get them from, since the tequila industry is not continuous in its production process, and there are periods where there are no discharges in the plant. Alternatively, therefore, it is necessary to ask the authorities, in this case the town council. It should also be added that in addition to the high operating costs of personnel that would supervise the plant, there are the chemical products, construction of tanks and biological reactor to be bought. With regard to the land that would be needed, it would be a half hectare.

Another disadvantage is the high costs of auxiliary equipment such as pumps, chemical measurement equipment for the aeration system, etc. All of the above makes this type of system non-viable for carrying out the process, notwithstanding the fact that it is unsafe to handle the contaminants since the concentration thereof is still outside the parameters established by most of Official Standards worldwide.

The physical-chemical process and/or treatment eliminates contaminants through physical and chemical methods, wherein 40% of the contaminants in the stillage are eliminated by separating out the solids by pouring the stillage through a series of traps. As the stillage passes through, the solids sediment at the bottom of the separator traps by means of a natural decanting system. It is generally made of reinforced concrete, and the solid already decanted out is extracted manually and sent to a collector and then afterwards to drying areas for total evaporation or even to be mixed into a biomass. The liquid, once the solids have been removed, is transferred through open channels until it reaches a tank neutralized for the purpose of cooling the liquid to ambient temperature. The residual liquid already in the tank has a temperature that fluctuates between 40°C and 50°C and is neutralized using calcium hydroxide, or even with an organic polymer having a pH value of 7.00. Here, the stillage turns a coffee or black color by the action of the oxidation of sugars. One disadvantage of this process is that the stillage does not have all the characteristics established by the National Water Commission. Another is the fact of the operating costs it entails, not to mention the fact that the removal of solids must be done manually, and this method also requires a large amount of land, according to estimates approximately ½ hectare for construction of neutralization tanks and open channels for sedimentation.

The process of evaporating stillage using single or double effect evaporation carries out evaporation using batches of water, wherein upon contact with a heating system of the hot steel type or on the other hand through coils containing water vapor, a heat transfer process occurs, thus evaporating the stillage and obtaining water vapor, and sending it into the atmosphere. This does, however, leave behind a concentrated liquor of sugars, and it should also be considered that for this system water vapor that comes from a boiler is required, and consumption of steam generated by the boiler entails very high amounts of fuel consumption as well as large amounts of steam, or on the other hand, electrical resistance heating elements to evaporate the stream of stillage generated. Moreover, when this system is used, a steam such as acidic fog is sent into the atmosphere, also damaging the processing equipment.

One more alternative which has been attempted for the purpose of breaking up the stillage is to use it as a liquid for agricultural irrigation in planting agave. The disadvantage of this system is that the stillage has acid characteristics that acidify the soil and therefore make it infertile.

### DESCRIPTION OF THE INVENTION

The characteristic details of this process and equipment are clearly demonstrated in the description and figures which follow, using as a reference the signs [numbers and letters] which indicate the various parts shown.
Figure 1. This is a vertical longitudinal cutaway view of the heat exchanger with the parts that comprise it.
Figure 2. This is a vertical longitudinal cutaway view of the stillage evaporator with the parts that comprise it.
Figure 3. This is a perspective view of the connected heat exchanger and evaporator.
Figure 4. This is a flow diagram of the process for treating stillage.

### BEST KNOWN METHOD FOR PRACTICING THE INVENTION

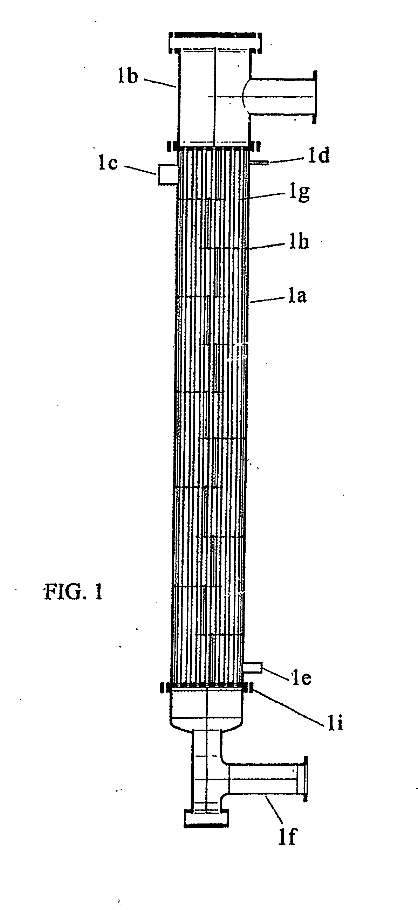

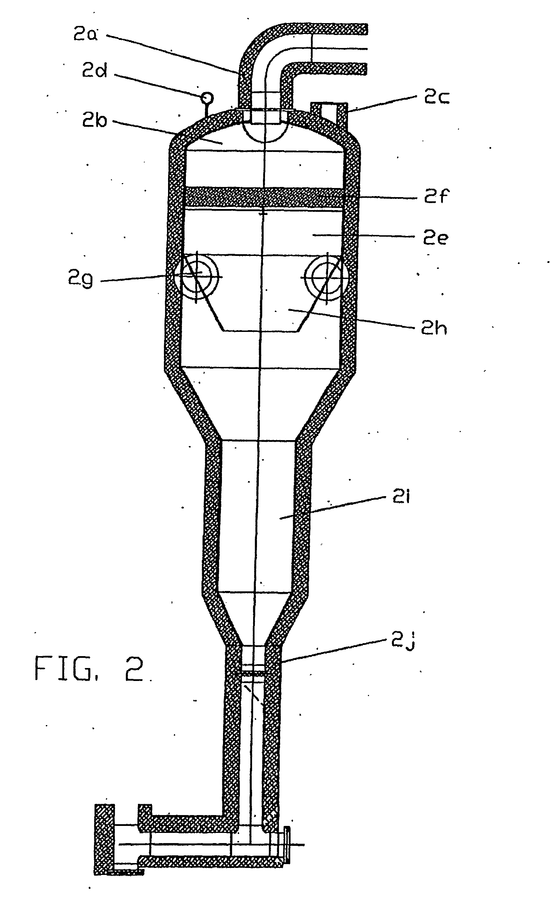

This object of this process and this equipment for treating stillage is to eliminate all the contaminants contained therein so that the water can be recovered in the form of water vapor and re-integrated into the process, and the remainder used in byproducts. This process also relates to the various devices necessary to properly carry out the process, which are not described in detail because they are known to those skilled in the art. Nonetheless, this invention relates to innovative devices, for which reason this equipment, made specially for integration into the aforementioned process, will be described below. Thus, this invention relates to a steam-liquid heat exchanger as depicted in Fig. 1 and a stillage evaporator as depicted in Fig. 2.

The steam-liquid heat exchanger as depicted in Fig. 1 comprises a stainless steel duct (1a), and this duct (1a) has at its top, on the outside, a cleaning valve (1b) which is a stainless steel flange for eliminating the fouling incrustations on the inside of the pipes (1g) caused by the sugars that pass through while the exchanger (Fig. 1) is in operation. This valve (1b) is of great importance, since if it is not cleaned, the heat effect of the exchanger will lose its efficacy. The valve (1b) is removable, that is, it can be connected and disconnected if there is a need to clean it, and it is important to point out that the common exchangers do not have this valve (1b). The duct (1a) has on its top left a steam inlet (1c) for injection of clean steam from the boilers, and on its top right a steam outlet (1d). Connected to its bottom is a stillage feed head (1f) which is a T-shaped stainless steel flange through which the stillage is injected so that it can enter the exchanger. The head (1f) is removable, and it should also be pointed out that the common exchangers do not have this fitting. Internally the duct (1a) has 130 5 centimetres stainless steel pipes (1g) through which the stillage circulates once it enters the exchanger (Fig. 1). The pipes are supported by means of risers (1h) constructed with steel plates 3/8 in thickness with internal separating partitions (1i) to stop the pipes (1g) from bending. The functional purpose of the exchanger is heat exchange, thereby beginning the process of evaporation.

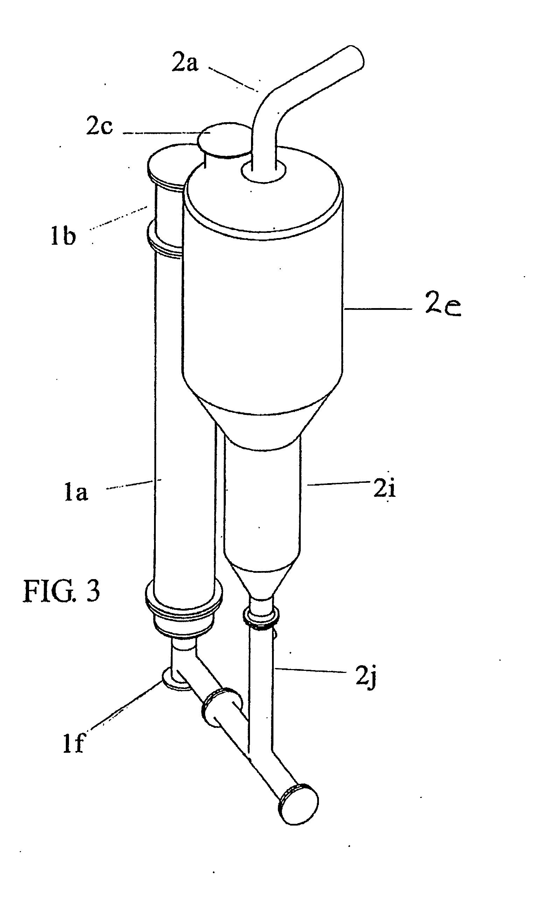

The stillage evaporator depicted in Fig. 2 comprises an elbow (2a) located at the top so as to connect to the evaporator with a high-efficiency cyclone. This elbow (2a) is connected to a vapor lock lid (2b) so as to prevent internal pressure and accumulation of solid material on the walls of the evaporator (Fig. 2). This lid (2b) has an inlet at top right for performing cleaning operations, as well as a safety valve (2d) to release the excess pressure when the evaporator is in operation (Fig. 2), because it works under pressure for the purpose of generating steam. The lid (2b) is connected to a cylinder (2e) which has a filter inside it(2f) constructed of flexible type 316 stainless steel. When packed, it forms a cushion to absorb the internal pressure as the result of fouling by the mashed material. The steam travels through this filter (2f) and all the solids are eliminated. The cylinder (2e) has a duct or tangential inlet (2g), through which the steam already generated in the exchanger (Fig. 1) passes on its way to the evaporator. The duct (2g) is connected to a shock partition (2h) made of stainless steel, so the steam coming from the duct (2g) is absorbed by the partition (2h) causing the latter to have the effect of increasing the steam velocity to 149.98 m³/min. That is, the velocity of the steam generated at the outlet of the internal pipes of the exchanger (1g) is greater than the centrifugal force generated in the partition of the evaporator (2h) created by the concentric shape of the duct or inlet (2g) of steam which formed in the pipes (1g), thus causing the solids to sediment. The cylinder (2e) is joined at its bottom to another conical connection cylinder (2i), the purpose of which is to reduce the contact surface area in the bottom (2j) of the evaporator and thereby increase the steam velocity until a velocity of 151.60 m³/min is reached. The conical connection cylinder (2i) is connected to a T-shaped pickup pipe which is a steel fitting that connects to the evaporator with the exchanger (see Fig. 3), thus sealing the stillage feed head (1f) of the exchanger. The pipe (2j) works as a container for holding concentrate, where the condensates drain and thus stopping the processing line from becoming stopped up by the presence of solids in the flows (fluxes). It is through this pipe (2j) that the liquid stillage with low concentration of solids is injected in order to enter the exchanger.

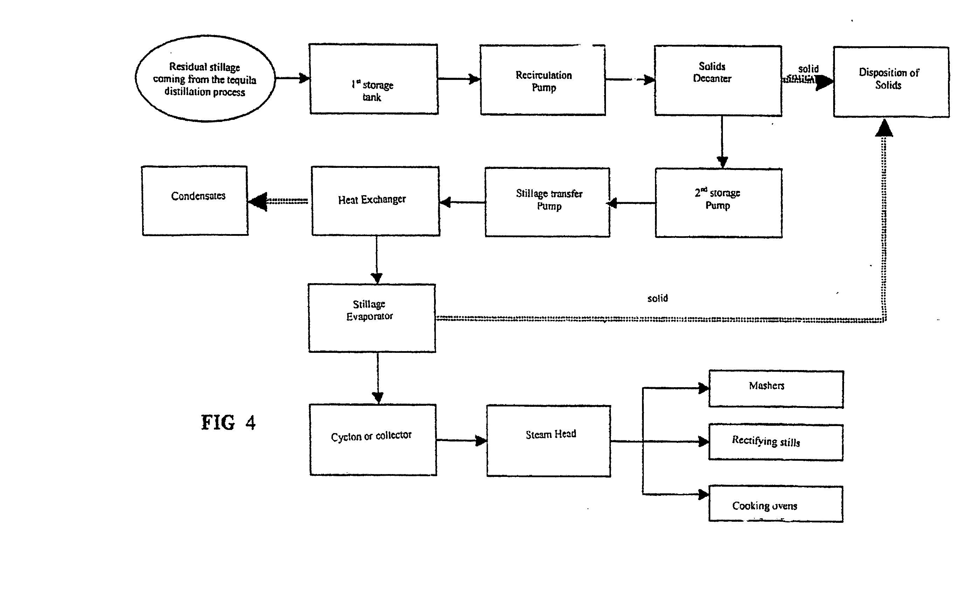

Up to this point we have just described the innovative equipment, but this invention also relates to a process for treating the residual stillage generated in the distillation step in the tequila industry, with the object of eliminating the contaminants contained in it and recovering stillage water by means of steam in order to be re-incorporated into the process as steam for cooking the raw material or in the mashing and distillation process. The aforementioned process consists in the following stages and a flowchart (Fig. 4) is given for better understanding.

First stage: "reception and storage of stillage". This process begins by receiving the residual stillage which is formed in the mashing and distillation process specifically of the alcoholic drink tequila. The stillage which comes from this step fluctuates between 80° and 85°C, retaining the physical-chemical characteristics such as temperature 84°C, pH 3.2, biochemical oxygen demand 15,200 mg/liter, total solids 17,368 mg/liter, soluble biochemical oxygen demand of 21,100 mg/liter. The stillage having these characteristics is discharged into a 1^{st} storage tank constructed of mud brick and lined inside with type-316 sloped stainless steel plate which is entirely hermetic in order to avoid loss of heat, as well as oxidation. The 1^{st} storage tank is connected to a recirculation pump to ensure that the stillage continues being mixed inside the 1^{st} storage tank until the stillage solids mixture becomes homogeneous. The time it remains in the 1^{st} storage tank varies, but nonetheless should fluctuate from 10 minutes to 25 minutes maximum and will depend on the load of stillage which is produced in the distillers and mashers. The velocity that is used to achieve the homogenous state will depend on the type of recirculation pump used for the type of discharge, for example: for a load of 0.11 m³/hrs - 110 liters/hour, a vertical type centrifugal pump 6000-8000 mg/L will be needed. It is important to mention that the type of flocs or size of the mashed stillage has no bearing on this except for the fact that the smaller the particles are, the easier the recirculation pump will extract from them.

Second step: "Separation of solids". The recirculation pump is connected to a solids decanter, and this recirculation pump will send the stillage, already in a homogenous state, to the solids decanter, which works by means of a high-speed screw system. The solids decanter, through the centrifugal force generated by the revolutions of the motor (optimum rpms are 2300/minute) and the operating conditions resulting in a decrease of 1°C in the temperature, causes the solid to separate out from the liquid. The time it takes to do this will be around 2 seconds between the time the stillage enters the solids decanter and the time that separation is achieved. The solid thereby moves into one of the ends of the solids decanter and the liquid is collected or transported to a collecting channel which is located in the processing plant. Thus the solid that comes out has been converted to a semi-dry paste with a relative moisture content of 18%. The solid obtained is compatible with others since it is not corrosive, not reactive, not explosive, non-toxic, inflammable, and presents no biological risk. It can be used in a widevariety of products, and with its high content of fiber, sugars, proteins and nutrients it can be used as a nutritional supplement for livestock or go into a mixture for organic biofertilizer or even go into a raw material for obtaining alcohols. On the other hand, the liquid obtained contains a final solids concentration of less than 8 ppm mg/liters. It is in this state that the stillage, after having had its solids removed, goes on to a 2^{nd} stillage storage tank with a 22,000-liter capacity equipped with steam coils for maintaining the stillage under optimum temperature conditions. Once the operating level of 15,000 liters has been reached, the stillage is pumped through a stillage transfer pump to the next step in the heat exchange.

Third step: "Heat exchange" The stillage transfer pump sends the liquid stillage with a low concentration of solids - less than 8 ppm mg/liter - and with a temperature of 83°C to a heat exchanger (Fig. 1) where clean steam coming from the boilers is injected, controlled by a disk valve at a pressure of 3 kg/cm. The heat exchanger (Fig. 1) is connected to a stillage evaporator, with the steam obtained from the exchanger being sent to the evaporator (Fig. 2) with an evaporation time of 2 to 3 seconds. The steam is injected through a duct with tangential inlet (2g), and when it hits the partition (2h) it experiences a tangential effect therein. Due to the speed of evaporation of the stillage in the exchanger (Fig. 1) the steam reaches an operating pressure of 3 kg/cm², a velocity at which this impact against the partition (2h) generates spiral turbulence, and its intensity causes the weight of the particles to increase. This effect causes the particles to sediment and thus a steam is obtained which has the quality of water vapor. The time it takes for this steam to be generated in the evaporator (Fig. 2) is from 5 to 10 seconds, attaining a temperature of 110° to 130°C. The fine solids obtained in the steam generation stage are deposited in the bottom (2j) of the evaporator and are mixed into the fatty solids obtained in the solids decanter, since they have the same characteristics as the solids from the preceding step, and are used as byproducts (the products already mentioned in step three).

Step Four "Evaporation". The steam obtained from the stillage evaporator (Fig. 2) is sent to a cyclone through an elbow (2a) for a second purification treatment process which will yield with the quality of water vapor. The cyclone generates the same tangential effect achieved in the evaporator or evaporation chamber (Fig. 3). The steam enters the cyclone at a pressure of 3 Kg/cm² and hits against the inside of the cyclone, generating turbulence and depositing the fine residual particles, thus obtaining the steam which has the quality of water vapor. At this point in the process, a temperature transmitter is placed inside the processing plant to ensure that the steam generated is kept in a range of 130-140°C and thus would ensure that traces of alcohol would be eliminated through the air venting line and ensure that the steam does not contain any volatile elements. Once the steam having the quality of 100% water vapor is injected into the steam head at a pressure of 3 Kg/cm² it travels through the steam line on its way to be injected into the mashers and rectifying stills or could even be sent to the cooking ovens. The steam head is a steam distributor; the steam coming from the boilers enters the steam head and is channeled to all the services in the plant.

The generated steam has the particular characteristic that its quality is of 100% water vapor having no odors or impurities, and for this reason one of the most important advantages of the invention is that the steam can be used in the process and therefore water is saved, since the liquid contained in the stillage is recovered as steam and can be re-used in the processing line. There is also the advantage that there is no residual discharge and therefore it is not necessary to have to make payments because pollutants are being dumped.

Thus the advantages of the process for treating stillage can be summarized as follows:

Effluent discharge is zero, that is, no wastes are poured into the rivers and canals, which is good because when wastes are disposed of in this way, penalizations uses to occur and companies are fined to pay charges for industrial polluting as set down by National Waters Law. Recovery of heat is done by taking advantage of the stillage discharge temperature, and recovering 100% of the water, which has a vapor quality good enough to be reused as water vapor in the distilling process. Once the steam has been used in the distilling process, 95% of the water is recovered from condensates to be reused in the steam generation line for feeding the boiler or for irrigation of gardens. Moreover, if the steam obtained in the process is re-used, the operating costs are reduced to $10.28/hour. The solid and condensate generated by the evaporation equipment contain sugars which can be used to generate ethyl alcohol if fermented. The solids obtained in this process can be used to make biofertilizers or even general nutritional supplements for livestock feed. In addition, the conventional processes for treating stillage have shown themselves to be poor alternatives, since their results do not comply with most of Official Standards worldwide and also because construction of a treatment plant of this sort takes up large areas of land. The stillage treatment process proposed in this invention does not occupy a lot of space since it is a piece of equipment more than a process, and it is compact, occupying a surface area of 180m² in total. It does not require highly skilled labor to operate it and can be operated by the boiler personnel or production line workers generally used in tequila industry processing.

## Claims

1. Process for the treatment of stillage generated by distillation in the tequila industry, **characterized by** a steam-liquid heat exchanger comprising a steel duct which has on its outside at top left a steam inlet for injection of clean steam, on its top right an air bleed for draining the equipment, and on its bottom right a steam outlet. Inside, the duct has 130 steel pipes through which the stillage circulates, said pipes being supported by risers with separating partitions to stop the pipes from bending, wherein the duct connects at its top on the outside to a cleaning valve which is a steel flange for eliminating the fouling incrustations on the insides of the pipes when the exchanger is in operation. The valve can be connected and disconnected in accordance with the need to clean, and the duct has on the bottom on the outside a stillage feed head which is a T-shaped steel flange through which the stillage is injected on its way to the exchanger. The stillage feed head is also removable.

2. Process for the treatment of stillage generated by distillation in the tequila industry according claim 1, **characterized by** a stillage evaporator comprising an elbow, which is located at the top to connect to the evaporator with a cyclone, and a vapor lock lid to avoid internal pressure and accumulation of solid material on the walls of the evaporator, the vapor lock lid having an inlet on top on the right-hand side so that the cleaning operation can be performed and on the left-hand side a safety valve to release pressure during the evaporation operation. This lid is connected to a cylinder which has inside it a duct or tangential inlet which is where the steam passes through that was previously generated in the exchanger, on its way to the evaporator. The duct is connected to a shock wall. The cylinder is joined to another conical connection cylinder, the purpose of which is to reduce the area of contact in the lower part of the equipment. The conical connection cylinder is connected to a T-shaped pickup pipe which is a steel flange that connects to the evaporator with the exchanger, thus sealing the stillage feed head of the exchanger. The pickup pipe is a container for receiving the concentrates where these drain out, **characterized by** the fact that the cylinder has inside it a steel filter that when packed forms a bed for attenuating the internal pressure which is the result of fouling by the scattered material therein. The steam passes through the filter and all the solids are eliminated. A shock partition made of stainless steel causes the steam coming from the duct or tangential inlet to hit the partition, producing the effect of increasing the steam velocity to 149.98 m³/min.

3. Process for the treatment of stillage generated by distillation in the tequila industry according claims 1 and 2, **characterized by** the following steps: the first step is "reception and storage of stillage" and it begins with reception of the residual stillage generated in the distillation and mashing specifically of the alcoholic beverage tequila. The stillage which comes from there varies between 80 and 85°C, retaining its physical and chemical characteristics such as temperature 84°C, pH 3.2, biochemical oxygen demand 15,200 mg/liter, total solids 17,368 mg/liter, soluble biochemical oxygen demand 21,100 mg/liter. The stillage with these characteristics is discharged into a 1^{st} storage tank which is connected to a recirculation pump to keep the stillage mixing inside the 1^{st} storage tank until the stillage solids are in a homogenous state. The time the stillage remains in the 1^{st} storage tank varies, but can be between 10 minutes and 25 minutes maximum and will depend on the load of stillage which is produced in the distillers and mashers. The speed at which the homogenous state is obtained will depend on the type of recirculation pump used for the type of discharge, for example: for a load of 0.11 m³/hrs - 110 liters/hour a vertical type centrifugal pump 6000-8000 mg/liters will be needed. The second step is: "Separation of solids". The recirculation pump is connected to a solids decanter, and the former sends the stillage in a homogenous state to the solids decanter, which through the centrifugal force generated by the revolutions of the motor (optimum rpms are 2300/minute) and the operating conditions lead to a decrease in 1°C in the temperature, causing the solids to separate out from the liquid. It takes about 2 seconds from the time the stillage enters the solids decanter until separation is achieved. The solids then move into one of the ends of the solids decanter and the liquid is collected or carried by a collecting channel. The solid that emerges therefrom is converted to a semi-dry paste with a relative moisture content of 18%. On the other hand the liquid obtained contains a final solids concentration of less than 8 ppm mg/liter. The liquid stillage, having been rendered free of solids, goes on to a 2^{nd} stillage storage tank with a 22,000-liter capacity, equipped with steam coils for maintaining the stillage under optimum temperature conditions. Once the operating level of 15,000 liters has been reached, the stillage is pumped via a stillage transfer pump to the next step in the heat exchange. The third step: "Heat exchange". The stillage transfer pump sends the liquid stillage with low concentration of solids (less than 8 ppm mg/liters) and with a temperature of 83°C to a heat exchanger, where clean steam coming from the boilers is injected, controlled by a disk valve at a pressure of 3 kg/cm. The steam obtained from the exchanger is sent to the stillage evaporator, the evaporation time being 2 to 3 seconds. The steam is injected by means of a duct with tangential inlet which upon hitting the partition experiences the tangential effect therein and due to the speed of evaporation of the stillage in the exchanger, the steam reaches an operating pressure of 3 kg/cm², a velocity at which the impact against the partition generates spiral turbulence, the intensity of which increases the weight of the particles, thereby causing them to sediment, and thus a steam is obtained with the quality of water vapor. The time it takes for steam to be generated in the evaporator is from 5 to 10 seconds, attaining a temperature of 110° to 130°C. The fine solids obtained in the steam generation stage are deposited in the bottom (2j) of the evaporator and are mixed into the fatty solids obtained in the solids decanter. The fourth step: "Evaporation". The steam obtained from the stillage evaporator is sent through an elbow to a cyclone for a second purification treatment process which will yield steam with the quality of water vapor. The cyclone gives rise to the same tangential effect achieved in the evaporator or evaporation chamber, since the steam enters the cyclone at a pressure of 3 kg/cm² the impact of which within the cyclone generates turbulence and causes the fine residual particles to deposit, thus obtaining a steam having the quality of water vapor. At this point in the process, a temperature transmitter is kept inside the processing plant to ensure that the steam generated is kept in a range of 130-140°C, thus ensuring that traces of alcohol are eliminated through the air venting line and that the steam does not contain any volatile elements. Then the steam having the quality of 100% water vapor is injected into a steam head at a pressure of 3 km/cm² into the steam line and is sent on to the mashers and rectifying stills or even to the cooking ovens. The head is a steam distributor where the steam coming from the boilers is channeled to all the services in the plant.
